# EUROPÄISCHE PATENTSCHRIFT

(11) **EP 3 436 214 B1**
(45) Veröffentlichungstag und Bekanntmachung des Hinweises auf die Patenterteilung: **19.04.2023**
(21) Anmeldenummer: 17701707.6
(22) Anmeldetag: 27.01.2017
(51) Int. Cl.: B23K 26/00, B23K 26/08, B23K 26/16, B23K 26/322, B23K 33/00, B23K 26/242, B23K 101/18, B23K 103/04

(54) **BAUTEILANORDNUNG MIT ENTGASUNGSHOHLRAUM ZWISCHEN ZWEI ÜBERLAPPENDEN BLECHEN UND VERFAHREN ZUM LASERSTRAHLSCHWEISSEN**
COMPONENT ARRANGEMENT WITH DEGASSING CAVITY BETWEEN TWO OVERLAPPING PLATES AND METHOD FOR LASER WELDING
ARRANGEMENT DE COMPOSANTS AVEC DÉGAZAGE CAVITÉ ENTRE DEUX FEUILLES CHEVAUCHENT ET PROCEDE DE LASER SOUDAGE

(30) Priorität: 31.03.2016 DE 102016205349
(43) Veröffentlichungstag der Anmeldung: 06.02.2019
(73) Patentinhaber: Bayerische Motoren Werke Aktiengesellschaft, 80809 München (DE)
(72) Erfinder: GRIMM, Alexander, 85757 Karlsfeld (DE)
(86) Internationale Anmeldenummer: PCT/EP2017/051746
(87) Internationale Veröffentlichungsnummer: WO 2017/167466

(56) Entgegenhaltungen:
- EP-A2- 0 771 605
- DE-A1-102012 104 362
- DE-C1- 19 932 415
- HOFFMANN M: "Analyse der verbindungskonstruktion im karosseriebau. Ermittlung von richtlinien fuer die laserstrahlschweig - gerechte gestaltung von Karosserie-Abschlubfalzen", THESE DE DOCTORAT PRESENTÉE AU DÉPARTEMENT DE CHIMIE DE L'UNIVERSITÉ DE LAUSANNE POUR L'OBTENTION DU GRADE DE DOCTEUR GBP ES SCIENCES,, 1. November 1991 (1991-11-01), Seite complete, XP007904431,

## Beschreibung

Die Erfindung betrifft eine Bauteilanordnung gemäß dem Oberbegriff von Patentanspruch 1 sowie ein Verfahren zum Laserstrahlschweißen.

Aus technischen oder optischen Gründen ist es häufig erwünscht, die Schweißnaht als Stirnkehlnaht am Überlappstoß auszubilden. Hierzu werden zwei Bauteile teilweise überlappend angeordnet. Der Laserstrahl wird entlang des Fügestoßes bzw. der Kehle geführt, welche von einer Stirn- oder Flankenfläche des mit Bezug auf den Laserstrahl obenliegenden Bauteils (Oberblech) und der angrenzenden Oberseite des darunterliegenden Bauteils (Unterblech) gebildet wird. Die Stirnkehlnaht wird auch als Flankenkehlnaht bezeichnet.

Durch moderne echtzeitfähige Nahtverfolgungssysteme ist es mittlerweile auch möglich, Kehlnähte mittels Remote-Laserstrahlschweißen herzustellen. Beim Remote-Laserstrahlschweißen wird ein Laserstrahl mit großer Brennweite über ein Scannersystem auf die zu bearbeitenden Bauteile gerichtet und über diese geführt. Das Scannersystem erlaubt eine ein- oder mehrachsige Ablenkung des Laserstrahls mit sehr hohen Bearbeitungsgeschwindigkeiten. Diese lassen sich noch steigern, wenn das Schweißen "on-the-fly" erfolgt, d.h. wenn das Scannersystem an einer beweglichen Mechanik, wie z.B. einem Industrieroboter montiert ist und von dieser bewegt wird. Üblicherweise erfolgt das Remote-Laserstrahlschweißen mit einem Arbeitsabstand von z.B. mehr als 0,4 m zur Schweißstelle. Hierbei wird üblicherweise zusatzwerkstofffrei geschweißt, da die Zufuhr von Zusatzdraht aufgrund des großen Arbeitsabstandes des Remote-Schweißens nicht oder nur sehr aufwendig möglich ist.

Aus Korrosionsschutzgründen werden z.B. im Karosserierohbau häufig Bleche verwendet, die mit einer Antikorrosionsbeschichtung versehen sind, wie beispielsweise verzinkte Stahlbleche. Die Beschichtung weist dabei meist einen niedrigen Siedepunkt auf, der weit unter dem Schmelzpunkt des Blechmaterials liegt. Beispielsweise wird das Stahlblech bei ca. 1500°C schmelzflüssig, während das Zink bereits bei ca. 900°C verdampft. Aufgrund der hohen Energieintensität des Schweißprozesses erfolgt die Verdampfung plötzlich, was insbesondere bei Überlappverbindungen zu einer verstärkten Bildung von Schweißspritzern führt. Die Schweißspritzer setzen sich als Ablagerung und Anhaftung auf der Bauteiloberfläche ab, wo sie die visuelle Qualität verschlechtern und zu Korrosion führen können. Der Materialverlust in der Schweißnaht führt zu Endkratern und Löchern und somit ggf. zu einem Festigkeitsabfall der Naht. Weiterhin führen die Schweißspritzer zu Verunreinigungen der Spannvorrichtung.

Um diese Probleme zu verhindern, sind für I-Nähte Lösungsansätze bekannt, bei denen die Bauteile mit einem definierten Entgasungsspalt von ca. 0,1 mm bis 0,2 mm überlappend übereinander angeordnet werden und verschweißt werden. So ist z.B. aus der Druckschrift DE 10 2014 006 077 B3 bekannt, den Entgasungsspalt über noppenartige Erhöhungen sicherzustellen, die auf einem der Fügepartner mittels Laserstrahlschmelzen ausgebildet werden. Weiterhin ist es aus der Druckschrift DE 199 32 415 C1 bekannt eine umlaufende Einprägung in eines der Bauteile einzubringen, so dass die Bauteile nur im Bereich der Einprägung aufeinanderliegen. Nachteilig an diesen Lösungen ist der zusätzliche Arbeitsschritt zur Herstellung der Erhöhungen.

Aus Hoffmann, M.: Analyse der Verbindungskonstruktion im Karosseriebau: Ermittlung von Richtlinien für die laserstrahlschweißgerechte Gestaltung von Karosserie-Abschlussfalzen", Diplomarbeit am Institut für allgemeine Konstruktionstechnik des Maschinenbaus der RWTH Aachen, 1.November 1991, XP007904431, sind verschiedene Faltflansche mit definiertem Fügespalt bekannt. Bie parallelm Fügespalt wird ein definierter Entgasungsspalt durch Noppen zwischen den Blechen erzeugt, alternativ wird vorgeschlagen, das Oberblech um das Unterblech herum zu biegen und schräg zu diesem anzustellen, wodurch eine voluminöse Tasche zur Entgasung entsteht.

Ein weiterer Ansatz, die Entgasungsmöglichkeiten an einer Stirnkehlnaht zu verbessern, ist z.B. aus der Druckschrift EP 0 771 605 A2 bekannt, die vorschlägt, zinkbeschichtete Blechbauteile vor dem Verschweißen im Nahtbereich unter einem spitzen Winkel aufeinander stoßend anzuordnen. Der Winkel dient zur Bildung eines Entgasungsbereichs und gewährleistet, dass die Zinkbeschichtung in gasförmiger Form entweichen kann, ohne das Schmelzbad der entstehenden Kehlnaht zu stören. Nachteilig ist hieran, dass die Querschnittsformen der zu verschweißenden Bauteile so aufeinander abgestimmt werden müssen, dass im Fügebereich der gewünschte Winkel eingestellt werden kann. Darüber hinaus erfordert diese Blechanordnung geeignete Spannvorrichtungen und einen erhöhten Aufwand, um den Anstellwinkel über die gesamte Schweißnahtlänge aufrechterhalten und sicherstellen zu können und gleichzeitig den Kontakt zwischen den Bauteilen nicht zu verlieren.

Aus der Druckschrift DE 10 2012 104 362 A1 ist es weiterhin bekannt, zwei Bauteile stirnseitig durch eine Steppschweißnaht zu verbinden. An den stirnseitigen Enden werden die Bleche schräg aufeinander zugeführt.

Die Aufgabe der vorliegenden Erfindung besteht folglich darin, eine verbesserte Bauteilanordnung sowie ein verbessertes Laserstrahl-Schweißverfahren für Stirnkehlnähte aufzuzeigen.

Gelöst wird diese Aufgabe hinsichtlich der Bauteilanordnung durch die Merkmale des Patentanspruchs 1 und bezüglich des Verfahrens durch die Maßnahmen des Patentanspruchs 10. Weitere vorteilhafte Ausgestaltungen der Erfindung ergeben sich aus den Unteransprüchen.

In einer Bauteilanordnung mit einem Oberblech, das überlappend auf einem Unterblech angeordnet ist, wobei zumindest ein Blech eine Beschichtung aufweist, und mittels Laserstrahlschweißen in zumindest einem Schweißnahtabschnitt mit einer Stirnkehlnaht verbunden werden soll, ist im Oberblech eine Struktur ausgebildet, durch die zwischen den flächig aufeinander angeordneten Blechen ein definierter Entgasungshohlraum geschaffen ist, der sich über die Länge des zumindest einen Schweißnahtabschnitts erstreckt und bis an die zu schweißende Stoßkante heranreicht.

Die Struktur ist so ausgebildet, dass das Oberblech vom Unterblech im Bereich der Struktur beabstandet ist. Der so entstehende Hohlraum reicht bis an die Stoßkante von Ober- und Unterblech heran, an der die Schweißnaht ausgebildet werden soll. Wird entlang der Stoßkante geschweißt, so kann der durch die Verdampfung der Beschichtung entstehende Dampf nicht nur zur Kehle, sondern auch in den Entgasungshohlraum entweichen. Der Entgasungshohlraum bietet ein definiertes Volumen, in das die beim Schweißen entstehenden Dämpfe, insbesondere Zinkdämpfe, propagieren können. Hierbei wirkt das Volumen des Hohlraums wie ein Puffer. Das entstehende Gas kann zunächst in den Hohlraum entweichen, wodurch der Druckanstieg im Nahtbereich verlangsamt wird. Ein plötzlicher Druckanstieg, der zu eruptionsartigen Auswürfen im Schmelzbad führen würde, kann vermieden werden.

Vorteilhafter Weise ist die Struktur räumlich begrenzt in dem an den Schweißnahtabschnitt angrenzenden Bereich ausgebildet. Die Struktur erfordert keine besondere Spanntechnik, vielmehr können die Bleche wie bei herkömmlichen Stirnkehlnähten flächig aufeinander mit möglichst geringem Abstand positioniert werden und es lassen sich herkömmliche Spannsysteme einsetzen.

Die Beschichtung ist vorzugsweise eine Antikorrosionsbeschichtung. Die Bleche können flache Bleche oder Blechformteile sein. Es kann sich bei den Blechen insbesondere um verzinkte Stahlbleche handeln, z.B. elektrolytisch verzinkte oder feuerverzinkte Stahlbleche. Die Bleche haben vorzugsweise eine Dicke im Bereich von 0,5 mm bis 3 mm.

Vorzugsweise ist die Struktur im Oberblech derart ausgestaltet, dass das Oberblech zumindest im Schweißnahtabschnitt in einem spitzen Winkel auf das Unterblech stoßend verläuft, insbesondere in einem Winkel im Bereich von 5 bis 45 Grad (bitte ergänzen).

Die Größe des Entgasungshohlraums kann an die Anforderungen bzgl. der aufzunehmenden Gasmenge angepasst sein. Einschränkungen ergeben sich hierbei u.a. durch Grenzen bei der Verformbarkeit des Oberblechs. Eine besondere Eignung ergibt sich für Bauteile, an denen kurze Nähte ausgebildet werden, bei denen der Schweißnahtabschnitt vorzugsweise eine Länge von weniger als 40 mm und insbesondere weniger als 30 mm aufweist.

Um den Hohlraum klein zu halten oder eine besonders große Menge an Zinkgas abzuführen, ist in einer Ausgestaltung die Struktur so ausgestaltet, dass der Entgasungshohlraum mindestens eine, neben dem Schweißnahtabschnitt angeordnete Entgasungsöffnung zur Kehle hin aufweist. Hierzu kann die Struktur z.B. so ausgebildet sein, dass das Oberblech einschließlich seines Randbereichs verformt ist.

Eine gleichmäßige Entgasung über den gesamten Schweißnahtverlauf wird in einer Ausgestaltung erzielt, in der die Struktur einen spiegelsymmetrischen Entgasungshohlraum mit zwei Entgasungsöffnungen bildet, der den Schweißnahtabschnitt c-förmig umgibt, wobei der Schweißnahtabschnitt zwischen den beiden Entgasungsöffnungen angeordnet ist. Die Entgasungsöffnungen sind vorzugsweise benachbart zum Anfang bzw. Ende des Schweißnahtabschnitts angeordnet und können alternativ auch unmittelbar an den Schweißnahtabschnitt angrenzen.

Die im Oberblech ausgebildete Struktur ist in einer bevorzugten Ausgestaltung durch einen Umformprozess hergestellt. Dies kann z.B. durch plastische Verformung des Oberblechs unter Verwendung eines Werkzeugs erfolgen, z.B. durch Prägen oder Tiefziehen. Die so hergestellte Struktur bietet neben der einfachen Herstellung auch den Vorteil der guten Reproduzierbarkeit bei hohen Stückzahlen, sowie der einfachen Integration in bestehende Produktionsprozesse, wie z.B. einen Tiefziehprozess zur Formgebung der Bleche. Umformprozesse bieten einen großen Freiheitsgrad hinsichtlich der Maße der Struktur. So können beispielsweise Abstände zwischen Oberblech und Unterblech erzielt werden, die ein Vielfaches der Blechdicke betragen. Es können wesentlich größere Entgasungsfreiräume geschaffen werden, als diese durch in Bleche eingebrachte Aussparungen möglich wäre.

Ein verbesserter Kontakt zwischen Ober- und Unterblech in dem zu schweißenden Abschnitt wird in einer Ausgestaltung dadurch erreicht, dass die Struktur im Oberblech so ausgebildet ist, dass die Stirnflächenunterkante des Oberblechs im unverbauten Zustand im Schweißnahtabschnitt geringfügig tiefer, z.B. ein Zehntel bis drei Zehntel Millimeter tiefer, insbesondere zwei Zehntel bis drei Zehntel Millimeter tiefer, angeordnet ist als die die Abschnitte der Stirnflächenunterkante außerhalb der Struktur und federartig nachgibt, wenn das Oberblech auf das Unterblech gespannt wird.

Die Bauteilanordnung kann einen Schweißnahtabschnitt sowie eine dem Schweißnahtabschnitt zugeordnete Struktur im Oberblech enthalten. In einer alternativen Ausgestaltung sind in der Bauteilanordnung zwei oder mehr Schweißnahtabschnitte vorgesehen, in denen jeweils eine Stirnkehlnaht ausgebildet werden soll. Die Schweißnahtabschnitte sind voneinander beabstandet und die Bauteilanordnung weist im Oberblech für jeden dieser Schweißnahtabschnitte eine Struktur zur Schaffung eines Entgasungshohlraums auf.

Durch Ausbildung einer Laserschweißnaht werden Ober- und Unterblech entlang des einen Schweißnahtabschnitts bzw. der Schweißnahtabschnitte mit einer Stirnkehlnaht bzw. mehreren Stirnkehlnähten verschweißt. Aufgrund des vorgesehenen Entgasungshohlraums neben der Naht werden Schweißspritzer reduziert bzw. vermieden und es wird eine hohe Nahtgüte erreicht.

Bezüglich des Verfahrens wird die Aufgabe der Erfindung gelöst durch ein Verfahren zum Laserstrahlschweißen, insbesondere zum Laser-Remoteschweißen, zumindest einer Stirnkehlnaht an einer wie voranstehend beschriebenen Bauteilanordnung, bei dem die Stirnkehlnaht entlang der Stoßkante in dem zumindest einen Schweißnahtabschnitt ausgebildet wird. Hierbei erzielt das Verfahren die zur Bauteilanordnung beschriebenen Wirkungen und Vorteile.

Erfindungsgemäß wird durch die Struktur im Oberblech eine definierte Entgasungsmöglichkeit bereitgestellt. Die Gasexpansion muss nicht durch die Schweißnaht stattfinden, Auswürfe während des Schweißprozesses können verringert bzw. vermieden werden. Die Struktur zur Erzielung des Entgasungshohlraums wird direkt im Oberblech ausgebildet und kann wiederholgenau eingebracht werden, z.B. im Tiefziehprozess, ohne dass zusätzliche Prozessschritte notwendig sind. Die Strukturen werden lokal auf den zu schweißenden Bereich begrenzt, weshalb weiterhin einfache, flächige Spannvorrichtungen verwendet werden können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele an Hand der beiliegenden Zeichnungen erläutert. Darin zeigen:
- Figur 1: eine Draufsicht auf eine Bauteilanordnung mit beispielhafter Struktur im Oberblech,
- Figur 2: eine Schnittansicht der Struktur aus Figur 1
- Figur 3: eine Frontalansicht der Struktur aus Figur 1
- Figur 4: eine Draufsicht auf eine weitere beispielhafte Bauteilanordnung.

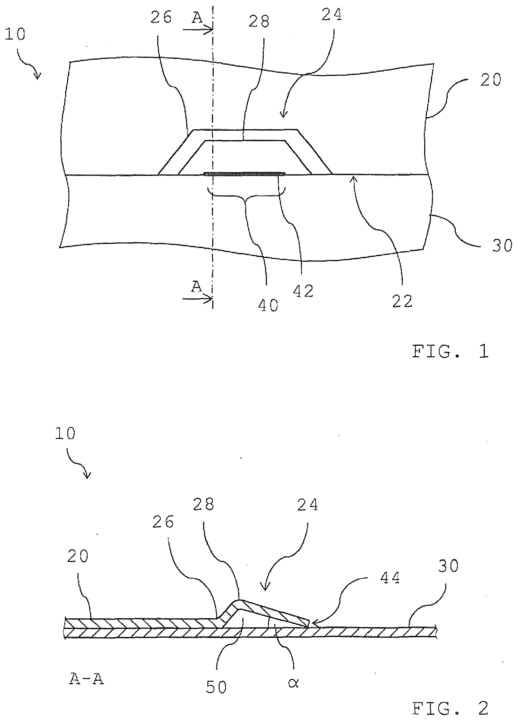

In der Bauteilanordnung 10 aus Figur 1 ist ein erstes verzinktes Stahlblech 20 teilweise überlappend auf einem zweiten verzinkten Stahlblech 30 angeordnet. Die Bleche 20 und 30 sind mit möglichst geringem Spalt (technischem Nullspalt) flächig aufeinander positioniert und verspannt. Im Schweißnahtabschnitt 40 ist eine Stirnkehlnaht 42 ausgebildet. Hierzu wurde ein Laserstrahl einer Laser-Remote-Schweißanlage entlang der Kehle geführt, welche durch die Stirnfläche bzw. Flankenfläche 22 und die angrenzende Auflagefläche des Unterblechs 30 gebildet wird. Das RemoteSchweißen erfolgt zusatzwerkstofffrei.

Zur Verbesserung der Zinkentgasung während des Schweißprozesses ist in dem Oberblech 20 eine definierte Entgasungsmöglichkeit vorgesehen. Hierzu weist das Oberblech 20 eine Struktur 24 auf, die an den Schweißnahtabschnitt 40 angrenzt. Die Struktur 24 in Form einer Prägung ist im Randbereich des Oberblechs 20 entlang des Schweißnahtabschnitts 40 ausgebildet und reicht bis an die Stirnfläche 22 heran. Die Struktur 24 ist als erhabene Prägungen ausgeführt, d.h. das Oberblech 20 erhebt sich in die vom Unterblech 30 abgewandte Richtung. Die Struktur 24 wird durch die Stirnfläche 22 und eine Außenkante bzw. einen Außenknick 26 begrenzt. Innerhalb dieses Bereichs schafft die Struktur einen Hohlraum zwischen Oberblech 20 und Unterblech 30, in den das bei der Schweißung entstehende Zinkgas expandieren kann.

Figur 2 zeigt eine Schnittansicht A-A der Struktur 24 vor Ausbildung der Kehlnaht 42. Entlang der Stoßkante 44, wo die Kehlnaht 42 ausgebildet wird, liegen Oberblech 20 und Unterblech 30 möglichst spaltfrei aufeinander auf. Der Entgasungshohlraum 50 wird geschaffen, indem das Oberblech 20 von der Stoßkante 44 zunächst unter einem spitzen Winkel α von dem Unterblech 30'weggeführt wird. Der maximale Abstand zwischen den Blechen wird an der Kante 28 erreicht. Von dort wird das Oberblech 20 zurück auf das Unterblech 30 geführt.

Außerhalb der Struktur bzw. Prägung 24 sind die Bleche 20 und 30 mit technischem Nullspalt zueinander positioniert. Es wird so in eine lokal begrenzte, angestellte Blechanordnung bereitgestellt mit den Vorteilen einer gezielten Gasexpansionsmöglichkeit bei gleichzeitig einfacher, da flächiger Anordnung und Verspannung der Bauteile.

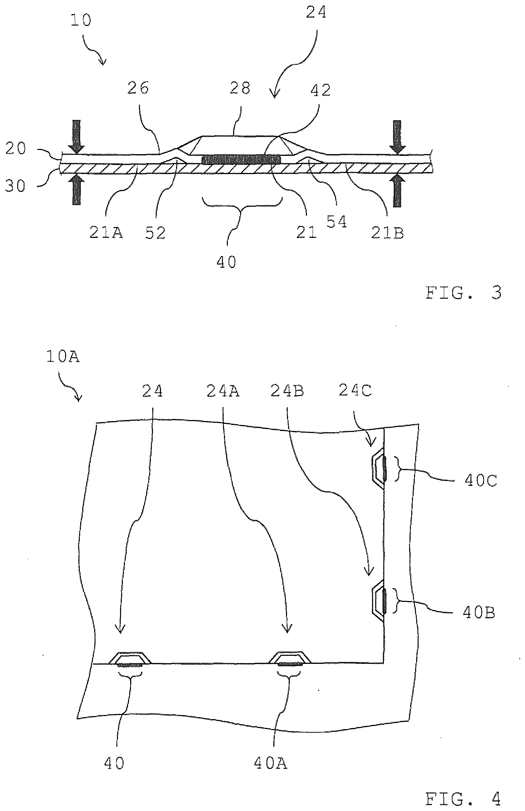

Die in Figur 1 gezeigte Struktur 24 ist um den Schweißnahtabschnitt 40 herumgeführt und umgibt diesen c-förmig. Der durch die Struktur 24 geschaffene Entgasungshohlraum 50 endet in zwei Entgasungsöffnungen 52 und 54 rechts und links vom Schweißnahtabschnitt 40, siehe hierzu die Frontalansicht auf das Oberblech 20 in Figur 3. Während des Schweißens expandiert das Zinkgas zunächst in den Entgasungshohlraum 50. Von dort kann es über die Entgasungsöffnungen 52 und 54 entweichen. Eine Entgasung durch die Schweißnaht 42 ist nicht notwendig, weshalb durch Zinkentgasung bedingte Auswürfe vollständig vermieden bzw. reduziert werden können.

Oberblech 20 und Unterblech 30 sind außerhalb der Struktur 24 flächig miteinander verspannt, angedeutet durch die Pfeile in Figur 3. Hierdurch wird die Stirnflächenunterkante 21 des Oberblechs 20 auf das Unterblech 30 gedrückt, ausgenommen die Bereiche der Entgasungsöffnungen 52 und 54. Um den Kontakt im Schweißnahtbereich zwischen Stirnflächenkante 21 und Unterblech 30 zu verbessern, ist die Struktur 24 so ausgebildet, dass die Stirnflächenunterkante 21 im Schweißnahtabschnitt 40 im unverbauten Zustand geringfügig tiefer, z.B. ein Zehntel bis drei Zehntel Millimeter, insbesondere zwei Zehntel bis drei Zehntel Millimeter tiefer angeordnet ist, als die Abschnitte der Stirnflächenunterkante 21A und 21B außerhalb der Struktur 24. Wenn das Oberblech 20 auf das Unterblech 30 gespannt wird, wird die Stirnflächenunterkante 21 im Schweißnahtabschnitt 40 federartig auf das Unterblech 20 gepresst. Die Stirnflächenunterkante 21 wird dabei gerade so viel tiefer gesetzt, dass ein sicherer Kontakt zum Unterblech gewährleistet ist.

Die Länge der Schweißnaht bzw. des Schweißnahtabschnitts beträgt beispielsweise 25 mm, kann jedoch je nach Anwendung variiert werden. Um Bauteile miteinander zu verschweißen, können mehrere der voranstehend beschriebenen Strukturen 24 in dem Oberblech 20 vorgesehen sein, wobei für jeden Schweißnahtabschnitt 40, 40A, 40B, 40C eine Struktur 24, 24A, 24B, 24C vorgesehen wird, siehe Bauteilanordnung 10A in Figur 4. Die Strukturen werden in ihren Längen an die Schweißnahtlängen angepasst und können mit gleichen oder unterschiedlichen Abständen gesetzt werden.

Die Ausführungsbeispiele sind nicht maßstabsgetreu und nicht beschränkend. Abwandlungen im Rahmen des fachmännischen Handelns sind möglich.

### Bezugszeichenliste

- 10, 10A: Bauteilanordnung
- 20: Oberblech
- 21, 21A, 21B: Stirnflächenunterkante
- 22: Stirnfläche
- 24: Struktur
- 26: Außenkante
- 28: Kante
- 30: Unterblech
- 40: Schweißnahtabschnitt
- 42: Stirnkehlnaht
- 44: Stoßkante
- 50: Entgasungshohlraum
- 52, 54: Entgasungsöffnung
- α: Winkel

## Patentansprüche

1. Bauteilanordnung
mit einem Oberblech (20), das überlappend auf einem Unterblech (30) angeordnet ist und mittels Laserstrahlschweißen in zumindest einem Schweißnahtabschnitt (40) mit einer Stirnkehlnaht (42) verbunden werden soll, wobei zumindest eines der Bleche eine Beschichtung aufweist, wobei
im Oberblech (20) eine Struktur (24) ausgebildet ist, durch die zwischen den flächig aufeinander angeordneten Blechen (20, 30) ein definierter Entgasungshohlraum (50) geschaffen ist, der sich über die Länge des zumindest einen Schweißnahtabschnitts (40) erstreckt und bis an die zu schweißende Stoßkante (44) heranreicht,
**dadurch gekennzeichnet, dass**
die Struktur so ausgebildet ist, dass das Oberblech (20) vom Unterblech (30) im Bereich der Struktur beabstandet ist.

2. Bauteilanordnung nach Patentanspruch 1,
**dadurch gekennzeichnet, dass**
die Struktur (24) im Oberblech (20) derart ausgestaltet ist, dass das Oberblech (20) zumindest im Schweißnahtabschnitt (40) in einem spitzen Winkel (α) auf das Unterblech (30) stoßend verläuft.

3. Bauteilanordnung nach Patentanspruch 1 oder 2,
**dadurch gekennzeichnet, dass**
der Schweißnahtabschnitt (40) eine Länge von weniger als 40 mm und insbesondere weniger als 30 mm aufweist.

4. Bauteilanordnung nach einem der vorangehenden Patentansprüche,
**dadurch gekennzeichnet, dass**
die Struktur (24) so ausgestaltet ist, dass der Entgasungshohlraum (50) mindestens eine, neben dem Schweißnahtabschnitt angeordnete Entgasungsöffnung (52, 54) zur Kehle hin aufweist.

5. Bauteilanordnung nach einem der vorangehenden Patentansprüche,
**dadurch gekennzeichnet, dass**
die Struktur (24) einen spiegelsymmetrischen Entgasungshohlraum (50) mit zwei Entgasungsöffnungen (52, 54) bildet, der den Schweißnahtabschnitt (40) c-förmig umgibt, wobei der Schweißnahtabschnitt (40) zwischen den beiden Entgasungsöffnungen (52, 54) angeordnet ist.

6. Bauteilanordnung nach einem der vorangehenden Patentansprüche,
**dadurch gekennzeichnet, dass**
die Struktur (24) im Oberblech (20) durch einen Umformprozess ausgebildet ist.

7. Bauteilanordnung nach einem der vorangehenden Patentansprüche,
**dadurch gekennzeichnet, dass**
die Struktur (24) im Oberblech (20) so ausgebildet ist, dass die Stirnflächenunterkante (21) des Oberblechs (20) im Schweißnahtabschnitt (40) im unverbauten Zustand geringfügig tiefer angeordnet ist als die die Abschnitte der Stirnflächenunterkante (21A, 21B) außerhalb der Struktur (24) und federartig nachgibt, wenn das Oberblech (20) auf das Unterblech (30) gespannt wird.

8. Bauteilanordnung nach einem der vorangehenden Patentansprüche,
**dadurch gekennzeichnet, dass**
zwei oder mehr Schweißnahtabschnitte (40, 40A, 40B, 40C) vorgesehen sind, wobei das Oberblech (20) im Bereich jedes Schweißnahtabschnitts (40, 40A, 40B, 40C) die Struktur (24) zur Schaffung eines Entgasungshohlraums (50) aufweist.

9. Bauteilanordnung nach einem der vorangehenden
Patentansprüche,
bei der Oberblech (20) und Unterblech (30) im Bereich des Schweißnahtabschnitts (24) mit einer Stirnkehlnaht (42) verschweißt sind.

10. Verfahren zum Laserstrahlschweißen zumindest einer
Stirnkehlnaht (42) an einer Bauteilanordnung nach einem der vorangehenden Patentansprüche,
bei dem die Stirnkehlnaht (42) entlang einer Stoßkante (44) in dem zumindest einen Schweißnahtabschnitt (40) ausgebildet wird.

11. Verfahren nach Patentanspruch 10, wobei
das Laserstrahlschweißen ein Laser-Remoteschweißen ist.

## Claims

1. Component arrangement
comprising a top metal sheet (20) which is arranged on a bottom metal sheet (30) in an overlapping manner and which is intended to be connected by means of laser beam welding in at least one weld seam portion (40) by way of an edge fillet weld (42),
wherein at least one of the metal sheets has a coating,
wherein a structure (24) is formed in the top metal sheet (20), said structure creating a defined degassing cavity (50) between the metal sheets (20, 30) which are arranged areally on top of one another, said degassing cavity extending over the length of at least one weld seam portion (40) and reaching as far as the abutting edge (44) to be welded,
**characterized in that**
the structure is formed such that the top metal sheet (20) is spaced apart from the bottom metal sheet (30) in the region of the structure.

2. Component arrangement according to Patent Claim 1,
**characterized in that**
the structure (24) in the top metal sheet (20) is designed in such a way that the top metal sheet (20) runs, at least in the weld seam portion (40), at an acute angle (α) abutting against the bottom metal sheet (30).

3. Component arrangement according to Patent Claim 1 or 2,
**characterized in that**
the weld seam portion (40) has a length of less than 40 mm and in particular less than 30 mm.

4. Component arrangement according to one of the preceding patent claims,
**characterized in that**
the structure (24) is designed such that the degassing cavity (50) has at least one degassing opening (52, 54) towards the fillet, said degassing opening being arranged next to the weld seam portion.

5. Component arrangement according to one of the preceding patent claims,
**characterized in that**
the structure (24) forms a mirror-symmetrical degassing cavity (50) with two degassing openings (52, 54) which surrounds the weld seam portion (40) in a C-shaped manner, wherein the weld seam portion (40) is arranged between the two degassing openings (52, 54).

6. Component arrangement according to one of the preceding patent claims,
**characterized in that**
the structure (24) is formed in the top metal sheet (20) by a forming process.

7. Component arrangement according to one of the preceding patent claims,
**characterized in that**
the structure (24) in the top metal sheet (20) is formed such that, in the non-installed state, the end-face bottom edge (21) of the top metal sheet (20) in the weld seam portion (40) is arranged so as to be slightly lower than the portions of the end-face bottom edge (21A, 21B) outside the structure (24) and yields in a resilient manner when the top metal sheet (20) is clamped onto the bottom metal sheet (30).

8. Component arrangement according to one of the preceding patent claims,
**characterized in that**
two or more weld seam portions (40, 40A, 40B, 40C) are provided, wherein the top metal sheet (20) has the structure (24) for creating a degassing cavity (50) in the region of each weld seam portion (40, 40A, 40B, 40C).

9. Component arrangement according to one of the preceding patent claims,
in which top metal sheet (20) and bottom metal sheet (30) are welded in the region of the weld seam portion (24) by way of an edge fillet weld (42).

10. Method for laser beam welding at least one edge fillet weld (42) on a component arrangement according to one of the preceding patent claims,
in which the edge fillet weld (42) is formed along an abutting edge (44) in the at least one weld seam portion (40).

11. Method according to Patent Claim 10, wherein the laser beam welding is remote laser welding.

## Revendications

1. Agencement de composants
avec une tôle supérieure (20), qui est agencée en chevauchement sur une tôle inférieure (30) et qui doit être reliée au moyen d'un soudage par faisceau laser dans au moins une section de cordon de soudure (40) avec une soudure d'angle frontale (42), au moins une des tôles présentant un revêtement,
une structure (24) étant réalisée dans la tôle supérieure (20), par laquelle une cavité de dégazage définie (50) est créé entre les tôles (20, 30) agencées à plat l'une sur l'autre, qui s'étend sur la longueur de l'au moins une section de cordon de soudure (40) et atteint l'arête de joint (44) à souder,
**caractérisé en ce que**
la structure est réalisée de telle sorte que la tôle supérieure (20) est espacée de la tôle inférieure (30) dans la zone de la structure.

2. Agencement de composants selon la revendication 1, **caractérisé en ce que** la structure (24) dans la tôle supérieure (20) est conçue de telle sorte que la tôle supérieure (20) s'étend au moins dans la section de cordon de soudure (40) en aboutement sur la tôle inférieure (30) en formant un angle aigu (α).

3. Agencement de composants selon la revendication 1 ou 2, **caractérisé en ce que** la section de cordon de soudure (40) présente une longueur inférieure à 40 mm et notamment inférieure à 30 mm.

4. Agencement de composants selon l'une quelconque des revendications précédentes, **caractérisé en ce que** la structure (24) est conçue de telle sorte que la cavité de dégazage (50) présente au moins une ouverture de dégazage (52, 54) vers la gorge, agencée à côté de la section de cordon de soudure.

5. Agencement de composants selon l'une quelconque des revendications précédentes, **caractérisé en ce que** la structure (24) forme une cavité de dégazage (50) à symétrie spéculaire avec deux ouvertures de dégazage (52, 54), qui entoure la section de cordon de soudure (40) en forme de c, la section de cordon de soudure (40) étant agencée entre les deux ouvertures de dégazage (52, 54).

6. Agencement de composants selon l'une quelconque des revendications précédentes, **caractérisé en ce que** la structure (24) dans la tôle supérieure (20) est réalisée par un processus de formage.

7. Agencement de composants selon l'une quelconque des revendications précédentes, **caractérisé en ce que** la structure (24) dans la tôle supérieure (20) est réalisée de telle sorte que le bord inférieur de surface frontale (21) de la tôle supérieure (20) dans la section de cordon de soudure (40), à l'état non assemblé, est agencé légèrement plus bas que les sections du bord inférieur de surface frontale (21A, 21B) à l'extérieur de la structure (24) et cède à la manière d'un ressort lorsque la tôle supérieure (20) est serrée sur la tôle inférieure (30) .

8. Agencement de composants selon l'une quelconque des revendications précédentes, **caractérisé en ce que** deux ou plus de deux sections de cordon de soudure (40, 40A, 40B, 400) sont prévues, la tôle supérieure (20) présentant, dans la zone de chaque section de cordon de soudure (40, 40A, 40B, 40C), la structure (24) pour créer une cavité de dégazage (50).

9. Agencement de composants selon l'une quelconque des revendications précédentes, dans lequel la tôle supérieure (20) et la tôle inférieure (30) sont soudées dans la zone de la section de cordon de soudure (24) avec une soudure d'angle frontale (42).

10. Procédé de soudage par faisceau laser d'au moins une soudure d'angle frontale (42) sur un agencement de composants selon l'une quelconque des revendications précédentes, dans lequel la soudure d'angle frontale (42) est réalisée le long d'une arête de joint (44) dans l'au moins une section de cordon de soudure (40).

11. Procédé selon la revendication 10, dans lequel le soudage par faisceau laser est un soudage au laser à distance.
